(19) **Europäisches Patentamt**

**European Patent Office**

**Office européen des brevets**

(11)  **EP 1 023 695 B1**

(12)  ## EUROPEAN PATENT SPECIFICATION

(45) Date of publication and mention
of the grant of the patent:
**12.11.2003  Bulletin 2003/46**

(21) Application number: **98917776.1**

(22) Date of filing: **04.05.1998**

(51) Int Cl.[7]: **G06T 7/20**, H04N 7/26

(86) International application number:
**PCT/KR98/00110**

(87) International publication number:
**WO 99/021135 (29.04.1999 Gazette 1999/17)**

(54) **METHOD OF DECIDING ON THE PRESENCE OF GLOBAL MOTION BY USING 2-DIMENSIONAL TRANSLATIONAL MOTION VECTORS AND LINEAR REGRESSION**

VERFAHREN ZUR BESTIMMUNG DES VORHANDENSEINS GLOBALER BEWEGUNG UNTER VERWENDUNG 2-DIMENSIONALER TRANSLATIONSBEWEGUNGSVEKTOREN UND LINEARER REGRESSION

PROCEDE DE DETERMINATION DE LA PRESENCE DE MOUVEMENT GLOBAL UTILISANT DES VECTEURS DE MOUVEMENT DE TRANSLATION EN DEUX DIMENSIONS ET UNE REGRESSION LINEAIRE

(84) Designated Contracting States:
**DE FR GB IT**

(30) Priority: **16.10.1997  KR 9752987**

(43) Date of publication of application:
**02.08.2000  Bulletin 2000/31**

(73) Proprietor: **Electronics and Telecommunications Research Institute
Daejeon-shi 305-350 (KR)**

(72) Inventors:
  • **CHOI, Jae, Gark** Hanbit Apt.
    **Daejon-shi 305-333 (KR)**
  • **KIM, Mun, Churl
    Daejon-shi 302-223 (KR)**
  • **YI, Jong, Won
    Seongnam Kyunggi-do 463-050 (KR)**
  • **LEE, Myoung, Ho
    Yusong-gu Daejon-shi 305-390 (KR)**
  • **AHN, Chie, Teuk
    Yusong-gu Daejeon-shi 305-390 (KR)**

(74) Representative: **Betten & Resch
Postfach 10 02 51
80076 München (DE)**

(56) References cited:
  **EP-A2- 0 797 357          GB-A- 2 277 002**

  • **PATENT ABSTRACTS OF JAPAN, Vol. 97, No. 1, (31.01.1997); & JP 08242454 A (RICOH) 17.09.1996.**

**Description**

**BACKGROUND OF THE INVENTION**

Field of the Invention

The present invention relates to a method of deciding on the presence of global motion in successive images.

Information Disclosure Statement

Conventional global motion estimation and compensation estimates global motion on the assumption that global motion always exists and performs global motion compensation by using the estimated global motion. However, there is a problem in the conventional method since even in case global motion does not exist but only local motion exists, the conventional method performs global motion compensation so that it reduces the coding efficiency and requires a lot of unnecessary computation in a global motion compensation process.

Therefore, in case of performing global motion compensation for moving image sequences, a method of deciding on the necessity of global motion compensation according to the result of deciding in advance on the existence of global motion is necessary since global motion is not always present.

UK patent application number GB-A-2277002 discloses a method of motion compensated video signal processing. In the application, an image is divided into blocks and local motion vectors are derived for each block indicating the possible motions of the block between frames. Global motion vectors are derived by selecting some of the most frequently occurring local vectors over the whole image and association means then compare a given global motion vector with the local motion vectors of a block.

**SUMMARY OF THE INVENTION**

The present invention is defined by the appended claims.

The object of the present invention, invented to solve the problems described above, is to provide a method of deciding the existence of global motion which can reduce the computation amount according to the motion compensation by not performing the global motion compensation and improve the coding efficiency at the time of application of image coding in case where the global motion does not exist, by deciding the presence of global motion by performing a test for global motion model adequacy after estimating the global motion by utilizing 2-D translational motion vectors and a linear regression.

In brief, the present invention, to accomplish the object described above, provides a method of deciding the presence of global motion which is applied to a global motion estimation and compensation apparatus comprising a first step of estimating a motion vector of a central point of each block from successive images; a second step of estimating a global motion parameter from the motion vectors by using linear regression; and a third step of deciding the presence of global motion by performing global motion model adequacy test for the motion vectors and global motion parameters.

**BRIEF DESCRIPTION OF THE DRAWINGS**

For fuller understanding of the nature and object of the invention, reference should be had to the following detailed description taken in conjunction with the accompanying drawings in which:

Fig. 1 is a constructional block diagram of a global motion estimation and compensation apparatus for successive images to which the present invention is applied; and
Fig. 2 is a flowchart of the method of deciding the presence of global motion according to the present invention.

Similar reference characters refer to similar parts in the several views of the drawings.

**DETAILED DESCRIPTION OF THE EMBODIMENTS**

Below a detailed description of an embodiment according to the present invention with reference to the accompanying drawings is given.

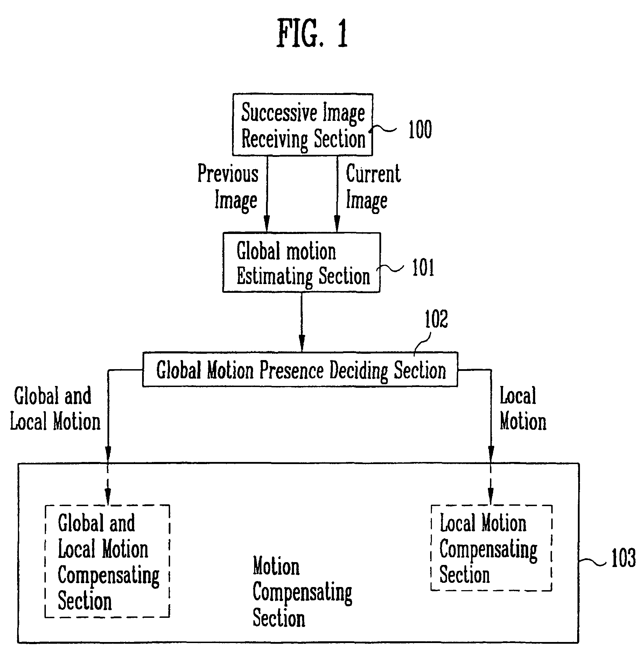

Fig. 1 is a constructional block diagram of a global motion estimation and compensation apparatus for successive images to which the present invention is applied and is a constructional block diagram of a motion estimation and compensation part of a video coding system.

First, a successive image receiving section **100** receives the successive images, and a global motion estimating section **101** receives a previous image and current image from the successive image receiving section **100** and estimates the global motion. That is, a global motion model is assumed and the global motion is estimated by using one of various global motion estimation methods.

A global motion presence deciding section **102** decides on the presence of global motion by using the estimated motion parameter.

A global motion compensating section **103** performs global motion compensation according to the result of decision of global motion presence according to the present invention. That is, in case of presence of global motion, global motion compensation is performed from the previous image frame by using the global motion parameter so as to remove the global motion existing between the current frame and the previous frame. Then, a local motion existing between the current frame and the global motion compensated image is estimated and compensated. In case of absence of global motion, the global motion compensation is not performed and only the local motion existing between the previous frame and current frame is estimated and compensated.

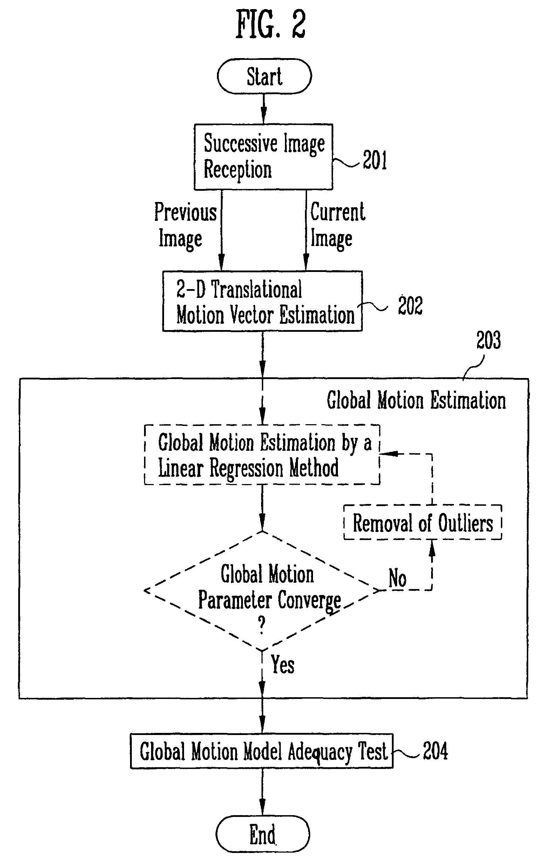

Fig. 2 is a flowchart of a method of deciding on the presence of global motion according to the present invention.

The present invention reduces the computation according to the motion compensation by not performing the global motion compensation and improves the coding efficiency at the time of application of image coding in case global motion does not exist, by deciding on the presence of global motion by performing a test for model adequacy of global motion after estimating the global motion by utilizing 2-D translational motion vectors and linear regression.

First, the successive images are received at step **201** and 2-dimensional translational motion vector $\{v_x(x_i, y_i), v_y(x_i, y_i)\}$ of the central point $(x_i, y_i)$ of each block is obtained from the received successive images at step **202**. That is, the motion vector of each block or the motion vector of central point of block is obtained by using the 2-D translational motion vector estimation method such as Block Matching Algorithm. In case where the motion vector of block is estimated, the estimated motion vector of block is taken as the motion vector of central point $(x_i, y_i)$ of block.

Thereafter, the global motion parameter a is estimated from the estimated 2-D translational motion vector $\{v_x(x_i, y_i), v_y(x_i, y_i)\}$ by using the linear regression. There can be various models such as affine model, perspective model and quadratic model as the global motion model. The method of deciding on the presence of global motion according to the present invention can be applied to any global motion model, however, an embodiment of the present invention will be explained based on an affine motion model, such as equation 1 described below.

[Equation 1]

$$\hat{v}_x(x, y) = x - x' \equiv a_1 + a_2 x + a_3 y$$

$$\hat{v}_y(x, y) = y - y' \equiv a_4 + a_5 x + a_6 y$$

Here, $(x', y')$ represents 2-D image-space coordinates before camera motion occurs, and $(x, y)$ represents 2-D image-space coordinates after camera motion occurs. $\{\hat{v}_x(x, y), \hat{v}_y(x, y)\}$ represents the theoretical motion vector at point $(x, y)$. Estimation of global motion parameters estimates the parameters such that the motion vector $\{\hat{v}_x(x_i, y_i), \hat{v}_y(x_i, y_i)\}$ of the central point of each block, computed according to equation 1, best matches the motion vector $\{v_x(x_i, y_i), v_y(x_i, y_i)\}$ of the central point of each block as estimated according to a 2-D translational motion estimation method. Assuming that the distribution of noise is a Gaussian distribution where all the averages are zero except the vectors due to minor local motions, least square error estimation becomes an optimum estimator, having unbiased and minimum variance which is unbiased in the sense of maximum likelihood according to the Gauss-Markov theorem. Therefore, the global motion parameters are obtained such that an error function, such as equation 2 described below, achieves its minimum.

[Equation 2]

$$E(a) = \sum_{i=1}^{N} [(v_x(x_i, y_i) - (a_1 + a_2 x_i + a_3 y_i))^2 + (v_y(x_i, y_i) - (a_4 + a_5 x_i + a_6 y_i))^2]$$

Here, N represents the number of all of motion vectors used in global motion parameter estimation. Since the local motion due to a moving object besides the global motion due to a camera can exist in the successive images, the motion vector due to local motion influences the global motion estimation in case of estimating the global motion by using the motion vectors of all block centers in the image. Therefore, the global motion parameters are estimated at step **203** by iteratively performing the global motion estimation and local motion removal (removal of outlier) until the global motion parameters converge.

Thereafter, the necessity of global motion compensation is decided at step **204** via the global motion model accuracy test from the estimated 2-D translational motion vectors and estimated global motion parameters.

Since the global motion parameters according to the present invention is estimated from the estimated translational motion vector $\{v_x(x_i, y_i), v_y(x_i, y_i)\}$ by using the linear regression, if the degree to which the global motion of image is well modeled by the given motion parameter is known, the given motion parameters can be taken as a reference for deciding whether the global motion exists in the successive images. That is, in case where the global motion is dominant in the motion of the successive images, it can be said that the estimated global motion parameters well describe the global motion in the image. If to the contrary only the local motion exists in the image, the estimated global motion parameters have no physical meaning. Based on such fact, the presence of global motion in the successive images can be decided by using the global motion mode adequacy test by using the estimated 2-D translational motion vector $\{v_x(x_i, y_i), v_y(x_i, y_i)\}$ and the motion vector $\{\mathbf{v}_x(x_i, y_i), \mathbf{v}_y(x_i, y_i)\}$ computed from the global motion parameter.

The global motion presence decision according to the present invention is performed by introducing the concept of coefficient of multiple determination $R^2$ which is frequently used in the linear regression analysis, the method being as follows. First, average motion vector $(\bar{\mathbf{v}}_x, \bar{\mathbf{v}}_y)$ such as the following equation 3 is obtained from the 2-D translational motion vector $\{v_x(x_i, y_i), v_y(x_i, y_i)\}$ of central point $(x_i, y_i)$ of each block estimated by using 2-D translational motion estimation method.

[Equation 3]

$$\bar{v}_x = \frac{1}{N}\sum\nolimits_{i=1}^{N} v_x (x_i , y_i) \quad , \quad \bar{v}_y = \frac{1}{N}\sum\nolimits_{i=1}^{N} v_y (x_i , y_i)$$

Here, N represents the number of motion vectors used in estimation of final global motion parameters except the motion vectors due to local motion.

Thereafter, an error sum $\{S_{vv.x}, S_{vv.y}\}$ between the estimated 2-D translational motion vector $\{v_x(x_i, y_i), v_y(x_i, y_i)\}$ and average motion vector $(\bar{\mathbf{v}}_x, \bar{\mathbf{v}}_y)$ of the estimated 2-D translational motion vector $\{v_x(x_i, y_i), v_y(x_i, y_i)\}$ is computed by the following equation 4.

[Equation 4]

$$S_{vvx} = \sum\nolimits_{i=1}^{N} ( v_x (x_i , y_i) - \bar{v}_x )^2 \quad , \quad S_{vvy} = \sum\nolimits_{i=1}^{N} ( v_y (x_i , y_i) - \bar{v}_y )^2$$

Then, an error sum $\{SS_{Ex}, SS_{Ey}\}$ between the translated 2-D translational motion vector $\{v_x(x_i, y_i), v_y(x_i, y_i)\}$ and the motion vector $\{v_x(x_i, y_i), v_y(x_i, y_i)\}$ computed by equation 1 from the global motion parameter obtained as an optimum solution is computed by following equation 5.

[Equation 5]

$$SS_{Ex} = \sum\nolimits_{i=1}^{N} [v_x (x_i , y_i) - \hat{v}_x (x_i , y_i)]^2 \quad , \quad SS_{Ey} = \sum\nolimits_{i=1}^{N} [v_y (x_i , y_i) - \hat{v}_y (x_i , y_i)]^2$$

Thereafter, coefficient of multiple determination $\{R_x^2, R_y^2\}$ is obtained by the following equation 6 from $\{S_{vv.x}, S_{vv.y}\}$ and $\{SS_{E.x}, SS_{E.y}\}$.

[Equation 6]

$$R_x^2 = 1 - \frac{SS_{Ex}}{S_{wx}} \ , \ R_y^2 = 1 - \frac{SS_{Ey}}{S_{wy}}$$

Coefficient of multiple determination $\{R_x^2, R_y^2\}$ can be used as a measure for reduction of variability of motion vector $\{\mathbf{v}_x(x_i, y_i), \mathbf{v}_y(x_i, y_i)\}$ obtained from the estimated motion parameter. That is, in case where the global motion is dominant, since the magnitude of the error sum $\{SS_{E.x}, SS_{E.y}\}$ of the optimum solution becomes relatively small, coefficient of multiple determination $\{R_x^2, R_y^2\}$ is increased. As can be seen from equation 6 described above, coefficient of multiple determination $\{R_x^2, R_y^2\}$ has a range of $0 \le R_x^2, R_y^2 \le 1$. Finally, the presence of global motion is decided as follows from coefficient of multiple determination $\{R_x^2, R_y^2\}$. Maximum value $R^2$ of coefficient of multiple determination $\{R_x^2, R_y^2\}$ is obtained by the following equation 7.

[Equation 7]

$$R^2 \equiv maximun \ [R_x^2, \ R_y^2]$$

When $R^2$ exceeds a given threshold value, it is decided that the global motion exists, and the global motion compensation is performed. When $R^2$ is smaller than the given threshold value, it is decided that the global motion does not exist, and the global motion compensation is not performed.

The present invention described above has an effect in that it can not only prevent the degradation of coding efficiency due to unconditional global motion compensation but also reduces the amount of computation by not performing the global motion compensation in case the global motion does not exist by deciding in advance on the presence of global motion.

The scope of the invention is limited only by the appended claims.

**Claims**

1.   A method of deciding on the presence of global motion in successive images comprising:

(a) estimating (101,202) for each block of pixels a corresponding motion vector between a current image and a previous image;
(b) estimating (101,203) global motion parameters, parameterising one global motion model, for the whole current image frame by linear regression using said estimated motion vectors such that the theoretical motion vectors of blocks, obtainable from said model using said estimated parameters, as a whole optimally match their corresponding estimated motion vectors;
(c) deciding (102,204) on the presence of global motion for the whole current image by a global motion model adequacy test which is based on the accuracy said model achieves for said estimated motion vectors using said estimated parameters; and
(d) using said model and its estimated parameters to perform (103) global motion compensation between the whole current image frame and the previous image frame if global motion has been detected by the global motion model adequacy test, and not performing any global motion compensation for the whole current image frame if no global motion has been detected by the global motion model adequacy test.

2.   The method as claimed in claim 1, wherein the decision whether global motion exists or does not exist between the current frame and the previous frame is made by comparing maximum value of coefficients of multiple determination, as used in linear regression analysis, with a predetermined threshold, wherein global motion is decided to exist in case the maximum value is larger than the predetermined threshold value and global motion is decided not to exist in case the maximum value is smaller than the predetermined threshold value.

3.   The method as claimed in claim 1, wherein the estimating step of step (a) is performed by obtaining a 2-D translational motion vector of each block by estimating the motion vector of the central point of each block from received successive images using a 2-D translational motion vector estimating method such as a block matching algorithm.

**4.** The method as claimed in claim 1, wherein step (b) further comprises:

(b-1) deciding whether the global motion parameters converge; and
(b-2) if the global motion parameters do not converge as a result of the decision at (b-1) step, performing removal of outliers and repeating the steps of (b), (b-1) and (b-2) until the global motion parameters converge.

**5.** The method as claimed in claim 1, wherein step (c) comprises:

obtaining an average motion vector by averaging the 2-D translational motion vectors of the central points of an blocks as estimated by a 2-D translational motion estimation method;
obtaining two error sums between the estimated 2-D translational motion vectors and the average motion vector;
obtaining coefficients of multiple determination from the two obtained error sums; and
obtaining a maximum value of coefficients of multiple determination, for deciding that the global motion exists in case the maximum value is larger than a predetermined threshold value, and for deciding that global motion dose not exist in case the maximum value is smaller than the predetermined threshold value.

**Patentansprüche**

**1.** Verfahren zum Bestimmen des Vorliegens einer globalen Bewegung in sukzessiven Bildern, welches aufweist:

(a) Abschätzen (101, 202) eines Bewegungsvektors zwischen einem momentanen Bild und einem vorhergehenden Bild für jeden Block von Pixeln;
(b) Abschätzen (101, 203) von globalen Bewegungsparametern, die ein globales Bewegungsmodell parametrisieren, und zwar für das gesamte momentane Bild durch lineare Regression unter Verwendung der abgeschätzten Bewegungsvektoren, und zwar so, daß die theoretischen Bewegungsvektoren von Blöcken, die von dem Modell unter Verwendung der abgeschätzten Parameter erhalten werden können, insgesamt optimal mit ihren entsprechenden abgeschätzten Bewegungsvektoren übereinstimmen;
(c) Entscheiden (102, 204), ob eine globale Bewegung für das gesamte momentane Bild vorliegt, und zwar durch einen Adäquatheitstest für ein globales Bewegungsmodell, der auf der Genauigkeit basiert, die das Modell für die abgeschätzten Bewegungsvektoren unter Verwendung der abgeschätzten Parameter erreicht; und
(d) Verwendung des Modells und seiner abgeschätzten Parameter, um eine globale Bewegungskompensation (103) zwischen dem gesamten momentanen Bild und dem vorhergehenden Bild durchzuführen, falls eine globale Bewegung durch den Adäquatheitstest für das globale Bewegungsmodell festgestellt wurde, und Verzichten auf das Durchführen einer globalen Bewegungskompensation für das gesamte momentane Bild, falls durch den Adäquatheitstest für das globale Bewegungsmodell keine globale Bewegung festgestellt wurde.

**2.** Verfahren nach Anspruch 1, bei dem die Entscheidung, ob eine globale Bewegung zwischen dem momentanen Bild und dem vorhergehenden Bild existiert durch Vergleichen des Maximalwerts von Koeffizienten mehrfacher Bestimmung, wie sie in einer linearen Regressionsanalyse verwendet werden, durchgeführt wird, wobei entschieden wird, daß eine globale Bewegung vorliegt, wenn der Maximalwert größer ist als ein vorbestimmter Schwellwert, und festgestellt wird, daß globale Bewegung nicht vorliegt, wenn der Maximalwert kleiner ist als der vorbestimmte Schwellwert.

**3.** Verfahren nach Anspruch 1, wobei der Schritt des Abschätzens (a) durchgeführt wird durch Erhalten eines 2-D-Translations-Bewegungsvektors von jedem Block durch Abschätzen des Bewegungsvektors des zentralen Punkts jeden Blockes von erhaltenen sukzessiven Bildern, und zwar durch Verwendung eines 2-D-Translations-Bewegungsvektorabschätzverfahrens, wie beispielsweise einem Block-Übereinstimmungsalgorithmus.

**4.** Verfahren nach Anspruch 1, wobei Schritt (b) ferner aufweist:

(b-1) Entscheiden, ob die globalen Bewegungsparameter konvergieren; und
(b-2) falls die globalen Bewegungsparameter als Ergebnis des Entscheidungsschritts bei (b-1) nicht konvergieren, Durchführen des Enffernens von Ausreißern und Wiederholen der Schritte von (b), (b-1) und (b-2) bis die globalen Bewegungsparameter konvergieren.

**5.** Verfahren nach Anspruch 1, wobei Schritt (c) aufweist:

Erhalten eines Durchschnitts-Bewegungsvektors durch Mitteln der 2-D-Translations-Bewegungsvektoren der zentralen Punkte aller Blöcke, wie sie durch das 2-D-Translations-Bewegungsabschätzverfahren abgeschätzt wurden;

Erhalten zweier Fehlersummen zwischen den abgeschätzten 2-D-Translations-Bewegungsvektoren und dem Durchschnitts- Bewegungsvektor;

Erhalten von Koeffizienten mehrfacher Bestimmung von den zwei erhaltenen Fehlersummen; und

Erhalten eines Maximalwerts von Koeffizienten von mehrfacher Bestimmung, und zwar um zu entscheiden, daß die globale Bewegung vorliegt, falls der Maximalwert größer ist als ein vorbestimmter Schwellwert, und um zu entscheiden, daß die globale Bewegung nicht vorliegt, falls der Maximalwert kleiner ist als der vorbestimmte Schwellwert.

**Revendications**

**1.** Procédé de détermination de la présence d'un mouvement global dans des images successives comprenant les étapes consistant à :

(a) estimer (101, 202), pour chaque bloc de pixels, un vecteur de mouvement correspondant entre une image actuelle et une image précédente ;

(b) estimer (101, 203) des paramètres de mouvement global, en paramétrant un modèle de mouvement global, pour l'ensemble du cadre de l'image actuelle par régression linéaire en utilisant lesdits vecteurs de mouvements estimés de sorte que les vecteurs de mouvements théoriques de blocs, pouvant être obtenus à partir dudit modèle en utilisant lesdits paramètres estimés, correspondent dans leur ensemble de manière optimale avec leurs vecteurs de mouvements estimés correspondants ;

(c) décider (102, 204) de la présence d'un mouvement global pour l'ensemble de l'image actuelle par un test d'adéquation de modèle de mouvement global basé sur la précision réalisée par ledit modèle pour lesdits vecteurs de mouvement estimés en utilisant lesdits paramètres estimés ; et

(d) utiliser ledit modèle et ses paramètres estimés de façon à réaliser (103) une compensation de mouvement global entre l'ensemble du cadre de l'image actuelle et le cadre de l'image précédente si un mouvement global a été détecté par le test d'adéquation de modèle de mouvement global, et à ne réaliser aucune compensation de mouvement global pour l'ensemble du cadre de l'image actuelle si aucun mouvement global n'a été détecté par le test d'adéquation de modèle de mouvement global.

**2.** Procédé selon la revendication 1, dans lequel la décision relative à la présence ou non d'un mouvement global entre le cadre actuel et le cadre précédent est réalisée en comparant une valeur maximum de coefficients d'une détermination multiple, comme utilisé dans une analyse de régression linéaire, avec un seuil prédéterminé, dans lequel il est décidé que le mouvement global est présent au cas où la valeur maximum est plus grande que la valeur de seuil prédéterminée et il est décidé que le mouvement global n'existe pas au cas où la valeur maximum est inférieure à la valeur de seuil prédéterminée.

**3.** Procédé selon la revendication 1, dans lequel l'étape consistant à estimer, de l'étape (a), est réalisée en obtenant un vecteur de mouvement de translation en deux dimensions de chaque bloc en déterminant le vecteur de mouvement du point central de chaque bloc à partir d'images successives reçues en utilisant un procédé d'estimation de vecteur de mouvement de translation en deux dimensions tel qu'un algorithme de correspondance de bloc.

**4.** Procédé selon la revendication 1, dans lequel l'étape (b) comprend en outre les étapes consistant à :

(b-1) décider si les paramètres de mouvement global convergent ; et

(b-2) si les paramètres de mouvement ne convergent pas, comme résultat de la décision de l'étape (b-1), effectuer le retrait de déviances et répéter les étapes (b), (b-1) et (b-2) jusqu'à ce que les paramètres de mouvement convergent.

**5.** Procédé selon la revendication 1, dans lequel l'étape (c) comprend les étapes consistant à :

obtenir un vecteur de mouvement moyen en effectuant une moyenne des vecteurs de mouvement de translation en deux dimensions des points centraux de tous les blocs, comme estimée par un procédé d'estimation de mouvement de translation en deux dimensions ;

obtenir deux sommes d'erreurs entre les vecteurs de mouvement de translation en deux dimensions et le vecteur de mouvement moyen ;

obtenir des coefficients de détermination multiple à partir des deux sommes d'erreurs ; et

obtenir une valeur maximum de coefficients d'une détermination multiple pour décider que le mouvement global existe au cas où la valeur maximum est plus grande qu'une valeur de seuil prédéterminée et pour décider que le mouvement global n'existe pas au cas où la valeur maximum est inférieure à la valeur de seuil prédéterminée.

# FIG. 1

Successive Image Receiving Section — 100

Previous Image    Current Image

Global motion Estimating Section — 101

102

Global Motion Presence Deciding Section

Global and Local Motion

Local Motion

Motion Compensating Section — 103

Global and Local Motion Compensating Section

Local Motion Compensating Section

# FIG. 2

```
Start
  │
  ▼
┌─────────────────────┐
│ Successive Image    │ ~ 201
│ Reception           │
└─────────────────────┘
  │                │
Previous         Current
Image            Image
  │                │
  ▼                ▼
┌─────────────────────┐
│ 2-D Translational   │ ~ 202
│ Motion Vector       │
│ Estimation          │
└─────────────────────┘
  │
  ▼
                                              203
┌──────────────────────────────────────────────────┐
│                          Global Motion Estimation │
│   │                                               │
│   ▼                                               │
│ ┌─────────────────────────┐                       │
│ │ Global Motion Estimation│◄──────┐               │
│ │ by a Linear Regression  │       │               │
│ │ Method                  │       │               │
│ └─────────────────────────┘       │               │
│   │                      ┌──────────────────┐      │
│   │                      │ Removal of       │      │
│   │                      │ Outliers         │      │
│   ▼                      └──────────────────┘      │
│      ╱╲                         ▲                  │
│     ╱  ╲                        │                  │
│    ╱ Global╲        No          │                  │
│   ╱ Motion   ╲──────────────────┘                  │
│   ╲ Parameter╱                                     │
│    ╲Converge╱                                      │
│     ╲  ?  ╱                                        │
│      ╲╱                                            │
│       │ Yes                                        │
└───────┼────────────────────────────────────────────┘
        │
        ▼
┌───────────────────────────────────┐
│ Global Motion Model Adequacy Test │ ~ 204
└───────────────────────────────────┘
        │
        ▼
      End
```